# FASCICULE DE BREVET EUROPEEN

(11) **EP 0 651 454 B1**
(45) Date de publication et mention de la délivrance du brevet: **19.03.1997**
(21) Numéro de dépôt: 93420430.6
(22) Date de dépôt: 28.10.1993
(51) Int. Cl.: H01M 10/40, B29C 47/00

(54) **Composition d'électrolyte polymère pour enduction par extrusion voie fondue sur l'électrode positive des batteries lithium électrolyte polymère (ACEP)**
Schmelzextrusionfähige Polymerelektrolytzusammensetzung zur Bekleidung der positiven Elektrode in Lithium-Batterien mit Polymerelektrolyt
Polymer electrolyte composition for application by melt extrusion on the positive electrode of lithium batteries with polymer electrolyte

(43) Date de publication de la demande: 03.05.1995
(73) Titulaire: HYDRO-QUEBEC, Montréal Québec H2Z 1A4 (CA)
(72) Inventeur: Duval, Michel, Montréal, Québec, H3W IT8 (CA)
(74) Mandataire: Guerre, Dominique

(56) Documents cités:
- EP-A- 0 013 199
- EP-A- 0 145 498
- EP-A- 0 379 372
- EP-A- 0 404 563
- EP-A- 0 533 576
- WO-A-88/03154
- GB-A- 2 201 154

## Description

La présente invention concerne l'enduction par extrusion voie fondue d'un électrolyte polymère sur l'électrode positive des batteries au lithium. L'invention concerne aussi des compositions d'électrolyte polymère pour enduction par extrusion voie fondue. Plus précisément l'invention se rapporte à un procédé d'enduction d'un électrolyte polymère solide constitué d'un copolymère ou terpolymère amorphe avec ou sans sel, ou d'un polymère cristallin additionné d'un sel ou d'un additif solide approprié pouvant le rendre partiellement amorphe, par extrusion voie fondue sur l'électrode positive d'une batterie au lithium tout solide.

Les batteries au lithium/électrolyte polymère ACEP résultent de la lamination/assemblage de trois types de films minces principaux: un film d'électrode positive contenant un matériau électrochimiquement actif comme l'oxyde de vanadium, un film d'électrolyte composé de polymère et de sel de lithium, et un film de lithium. Chacun de ces films a entre 15 et 50 µm d'épaisseur, pour une épaisseur totale du film de batterie élémentaire de 100 à 150 µm. Une trentaine de mètres de film de 15 cm de large est typiquement nécessaire pour obtenir une batterie de 100 Wh.

Les films d'électrolyte sont fabriqués principalement par mise en solution du polymère et du sel dans un mélange de solvants, enduction et évaporation des solvants. Ce procédé est long et coûteux en raison des faibles vitesses de mise en solution et d'évaporation réalisables, et des problèmes environnementaux, toxicologiques et de recyclage des solvants utilisés.

Les films d'électrolyte sont en outre préparés sur des supports d'enduction du type polypropylène, qu'il faut ensuite peler, une autre opération longue et coûteuse en raison des propriétés d'adhésion de l'électrolyte. Il est possible avec certains types de polymères de surépandre la solution d'électrolyte directement sur le film d'électrode positive, comme cela est indiqué dans le brevet US 4 968 319 du 6 novembre 1990, mais le plus souvent cette opération est difficile en raison des problèmes de gonflement et de décollement de la positive.

Le brevet Armand US 4 303 748 décrit des familles de polymères qui peuvent être utilisés comme électrolytes dans des batteries à électrolyte polymère/électrode négative de lithium. Armand mentionne que différentes méthodes peuvent être utilisées pour la mise en oeuvre de ces électrolytes par voie solvant ou par voie fondue, mais il ne dit pas exactement comme s'y prendre pour cela. Des familles de polymères plus élaborées (copolymères et terpolymères réticulables ou non) sont décrites plus en détail dans les brevets US 4 578 326, US 4 357 401 et CA 1 269 702, mais on n'apporte pas d'autres précisions quant à l'enduction de l'électrolyte sur la cathode.

Les brevets Raychem US 4 818 643 et US 5 013 619 décrivent des familles d'électrolytes qui peuvent être élaborées par voie fondue (extrusion). Ces familles sont à base de polyoxyde d'éthylène, de trifluorosulfonates de lithium et de plastifiants liquides très polaires comme le carbonate de propylène. La présence de plastifiant liquide est nécessaire en raison de la forte cristallinité du polyoxyde d'éthylène. Ces compositions sont extrudées autour de l'électrode de lithium pour le protéger par encapsulation et conduisent à des films de lithium et d'électrolyte relativement épais (environ 0,2-0,3 mm).

Les compositions et techniques décrites dans ces deux derniers brevets ne répondent pas convenablement aux besoins actuels de fabrication des batteries au lithium/électrolyte polymère. Elles nécessitent l'addition de plastifiants polaires qui peuvent provoquer des problèmes de cyclage des batteries par insertion et modifications irréversibles des matériaux d'électrode positive. Leur élimination par séchage introduit une étape supplémentaire qui retire une partie des avantages de la voie fondue par rapport à la voie solvant traditionnelle. Les épaisseurs qu'on peut obtenir pratiquement (0,2-0,3 mm) sont d'un ordre de grandeur trop élevée par rapport à celles visées (0,02-0,05mm) autant pour les électrolytes que pour le lithium.

La présente invention a pour objet de proposer un procédé d'enduction d'un électrolyte polymère sur la cathode directement par voie fondue.

Un autre objet de l'invention réside en l'utilisation de familles d'électrolytes qui permettent de pallier les inconvénients de l'art antérieur, grâce à l'utilisation de la voie fondue sans avoir recours à l'addition de plastifiants polaires liquides néfastes sur le plan électrochimique.

Un autre objet de l'invention est de proposer une méthode d'assemblage d'électrolyte sur l'électrode positive non envisagée dans l'art antérieur particulièrement dans le brevet US 4 818 643.

Un autre objet de l'invention consiste à proposer une méthode d'épandage d'électrolyte d'un plus grand intérêt pratique, grâce à l'épandage par extrusion voie fondue des électrolytes directement sur l'électrode positive sans avoir recours à des solutions de polymères.

Un autre objet de l'invention consiste à prévenir le décollement de l'électrode positive par rapport à l'électrolyte.

Un autre objet de l'invention réside en la mise au point d'un procédé industriel d'assemblage électrolyte-électrode positive libre des problèmes environnementaux, toxicologiques et économiques normalement rencontrés avec des solutions de polymères.

Afin de remplir les objectifs mentionnés ci-dessus, l'invention propose un procédé d'enduction d'un électrolyte polymère solide sur l'électrode positive d'une batterie au lithium tout solide. Ce procédé est caractérisé en ce que l'on introduit dans une extrudeuse une composition extrudable d'électrolyte, au moins partiellement amorphe, à base d'homopolymères, de copolymères ou de terpolymères avec ou sans sel de lithium, et sans plastifiants liquides, l'on extrude par voie fondue ladite composition sous forme d'un film mince d'électrolyte, d'une épaisseur uniforme entre environ 10 µm à environ 30 µm, et l'on épand directement ledit film mince, à la sortie de l'extrudeuse, sur un film d'électrode positive préparé préalablement.

De préférence, on fait défiler le film d'électrode positive sous la filière de l'extrudeuse lors de l'épandage du film mince d'électrolyte.

Selon une autre réalisation préférée de l'invention, on fait défiler le film d'électrode positive à une vitesse comprise entre environ 5 m/min et environ 10 m/min, de préférence environ 10 m/min.

Selon une autre réalisation de l'invention, on chauffe l'extrudeuse à une température comprise entre environ 50°C et environ 200°C selon les types de polymères ou de mélanges polymères/sels considérés.

De préférence, la température de l'extrudeuse se situe à environ 160°C pour les mélanges polymère cristallin/sel et à environ 80°C pour les mélanges polymère amorphe/sel.

Selon une autre réalisation préférée de l'invention, l'électrode positive a été préparée séparément, par exemple par voie solvant.

De nombreux polymères amorphes peuvent être utilisés pour constituer l'électrolyte selon l'invention, notamment les copolymères d'oxyde d'éthylène et d'un oxyde d'éther cyclique avec ou sans la présence d'un sel de lithium approprié. Plus particulièrement les polymères amorphes peuvent être choisis parmi ceux décrits dans les brevets mentionnés ci-dessus.

La composition extrudée peut aussi comporter au moins un polymère cristallin additionné d'un sel ou d'un additif solide approprié pouvant rendre le polymère partiellement amorphe. Par exemple, le polymère cristallin peut être additionné d'un sel de lithium compatible sur le plan électrochimique et ne présentant aucun danger de manipulation.

Selon une autre réalisation préférée de l'invention, la composition extrudée est constituée d'homopolymères ou de copolymères dérivés d'un ou plusieurs monomères comprenant au moins un hétéroatome capable de donner des liens de type donneur-récepteur avec un cation lithium provenant d'un sel de lithium approprié comme le terfluorosulfonimide de lithium ou ses dérivés.

Selon une autre réalisation préférée de l'invention, on fait défiler le film d'électrode positive à une vitesse légèrement supérieure à la vitesse du film mince à la sortie de l'extrudeuse afin de s'assurer d'un étirement produisant un épandage homogène d'épaisseur voulue du film mince extrudé sur le film d'électrode positive. Par exemple, le film mince sort de l'extrudeuse à une vitesse légèrement inférieure à 10 m/min, notamment entre 5 m/min et 10 m/min tandis que le film d'électrode positive défile à une vitesse égale à au moins 10 m/min.

L'invention concerne aussi une composition à base de copolymères ou terpolymères amorphes avec ou sans la présence d'un sel de lithium approprié ou de polymères cristallins additionnés d'un sel ou d'un additif solide approprié pouvant rendre le polymère partiellement amorphe pour utilisation par enduction voie fondue sur une électrode positive d'une batterie au lithium tout solide.

Selon l'invention, et à titre d'exemples non limitatifs, on peut préciser que les compositions suivantes sont suffisamment amorphes pour être utilisées par voie fondue sans la présence de plastifiants liquides et conduire à des films de qualité et d'épaisseur désirées. Cette amorphicité peut être obtenue soit par l'utilisation de polymères naturellement amorphes (co- et ter-polymères), soit par l'utilisation de sels de lithium solides plastifiants ou d'additifs solides appropriés avec des polymères naturellement plus cristallins:

1) les copolymères et terpolymères amorphes réticulables ou non décrits dans les brevets US 4 578 326 et US 4 758 487.

Par exemple, on pourrait utiliser un copolymère d'éthylène et d'un deuxième motif monomère choisi parmi les éther-oxydes cycliques, substitués ou non. Ces polymères peuvent être extrudés sans sel, ou avec le sel de lithium constituant l'autre partie de l'électrolyte. Dans ce dernier cas néanmoins, le sel de lithium, en plus d'être approprié sur le plan électrochimique, ne doit pas présenter de danger de manipulation. C'est ainsi que le perchlorate de lithium, qui peut exploser dans les conditions de pression et de température d'une extrudeuse, est exclus. Les sels à base de terfluorosulfonimide de lithium (TFSI) décrits dans le brevet US 4 505 997 ainsi que les sels de lithium dérivés des bis perhalogénoacyl ou - sulfonyliminde de lithium (TFSM) décrits dans les brevets US 4 818 644 (4 avril 1989) et PCT WO 92/02966 (25 juillet 1991) et utilisés couramment dans les batteries de type ACEP, sont par contre particulièrement appropriés.

2) les polymères plus cristallins décrits plus généralement dans le brevet US 4 303 748, incluant le polyoxyde d'éthylène, à condition de les rendre partiellement amorphes en ajoutant des sels de lithium de l'électrolyte décrits plus haut, ou d'autres additifs solides appropriés qui agissent comme plastifiants solides.

Les compositions polymère/sel contenant jusqu'à 50% du poids de sel par rapport au polymère, et particulièrement celles contenant 20% de sel, qui correspondent au contenu habituel des batteries ACEP, fournissent des résultats satisfaisants à l'extrusion.

Les compositions selon l'invention, entre autres celles mentionnées ci-dessus, peuvent être extrudées dans une extrudeuse et surépandues sur un film d'électrode positive préparé séparément, par exemple par voie solvant.

Les avantages d'une telle méthode par rapport aux techniques conventionnelles de préparation des électrolytes par voie solvant sont les suivantes:
- rapidité (30 m/min et plus, par rapport à 1 m/min);
- coût plus faible en raison de l'élimination des étapes de dissolution, d'évaporation et de recyclage des solvants (environ 8 fois plus de solvants que de polymère);
- absence de problèmes environnementaux et toxicologiques;
- meilleure qualité de l'interface électrode positive électrolyte;
- élimination des étapes de lamination et de pelage du support de l'électrolyte.

L'invention est par ailleurs illustrée par les dessins annexés donnés à titre de simple illustration et sans caractère limitatif, dans lesquels:
- la figure 1 est une courbe représentant le pourcentage d'utilisation en cyclage d'une pile dont l'électrolyte est préparée à partir d'une solution de polymère; et
- la figure 2 est une courbe similaire dans le cas d'une batterie selon l'invention.

Les exemples suivants illustrent l'invention sans la limiter.

### Exemple 1

Deux solutions d'électrode positive sont préparées en dissolvant dans l'acétonitrile du copolymère (MW 200.000), de l'oxyde de vanadium, du noir d'acétylène et du sel de lithium (TFSI). L'une contient une quantité normale de sel correspondant à un rapport O/Li (oxygène du motif monomère sur lithium du sel) à 30/1, et l'autre un excès de sel (rapport 10/1). Ces solutions sont épandues sur un rouleau de film d'aluminium de 15 cm de large et de 15 µm d'épaisseur, puis évaporées dans un tunnel de séchage pour obtenir deux films secs d'électrode positive d'environ 40 gm d'épaisseur chacun.

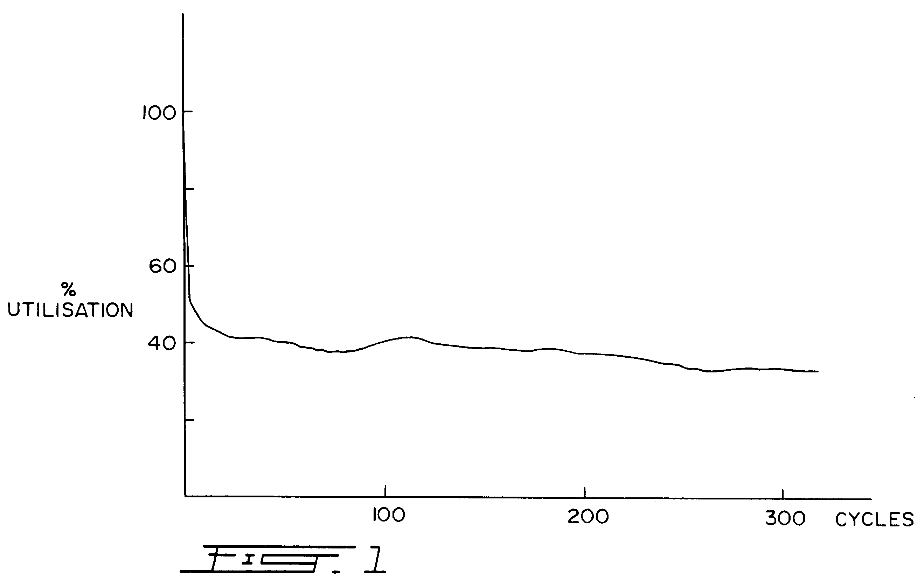

Une solution d'électrolyte est préparée en dissolvant dans l'acétonitrile du copolymère et du sel dans le rapport O/Li = 30/1. Cette solution est épandue sur un rouleau de film de polypropylène de 15 cm de large et de 25 gm d'épaisseur et évaporée pour obtenir un film d'électrolyte sec d'environ 30 µm d'épaisseur. Ce film sec est ensuite laminé à 70°C sur le film d'électrode positive de composition 30/1 et le film de polypropylène est pelé. Un film de lithium de 15 cm de largeur et de 20µm d'épaisseur est ensuite laminé sur l'électrolyte, et recouvert d'un film isolant de polypropylène de 8 µm d'épaisseur et 15 cm de large. On obtient ainsi une pile lithium/polymère dont la tension est de 3,4 V et le % d'utilisation en cyclage indiqué à la Figure 1.

### Exemple 2

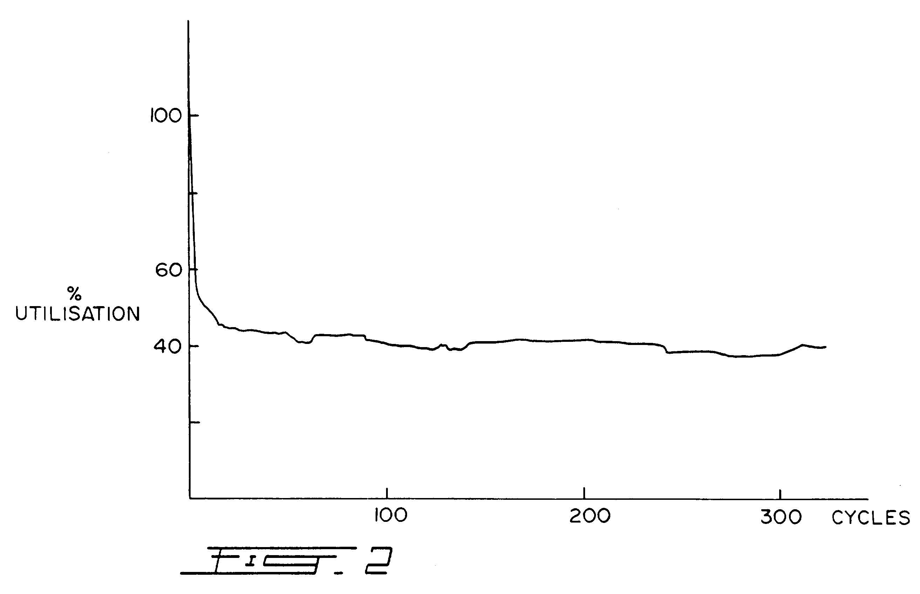

De la poudre de copolymère (MW 200.000) est introduite dans une extrudeuse à double vis de 3,8 cm de marque Echlin, chauffée à 160°C. Le copolymère fondu sort par une filière de 20 cm de largeur et est déposé sur le film d'électrode positive riche en sel (O/Li = 10/1) qui est déroulé par un système de rouleaux d'amenée sous la filière à une vitesse d'environ 10 m/min. Le film d'électrolyte a une épaisseur uniforme d'environ 30 µm et "mouille" très bien l'électrode positive. L'excès de polymère sur les côtés est coupé. Un film de lithium de 20 µm d'épaisseur et 14 cm de largeur est ensuite laminé sur l'électrolyte et recouvert d'un film isolant de polypropylène de 8 µm d'épaisseur. La pile ainsi constituée a la performance indiquée à la Figure 2, qui se compare avantageusement à celle obtenue par voie solvant conventionnelle (Figure 1). Ce bon comportement s'explique par la diffusion rapide vers l'électrolyte du sel en excès dans la positive, de façon à avoir un équilibre final dans ce dernier correspondant à un O/Li d'environ 30/1 comme dans l'exemple 1. La pile présente en outre un meilleur comportement en puissance (décharge rapide) que celle obtenue dans l'exemple 1.

### Exemple 3

Un compounder à double vis de marque Warner and Pfilder est utilisé pour alimenter la filière d'extrusion. Une atmosphère d'azote est maintenue sur le compounder pour éviter tout risque de dégradation du polymère. La poudre de copolymère est introduite à une extrémité du compounder et celle du sel de lithium TFSI au milieu du compounder, dans une proportion correspondant à un rapport de O/Li = 30/1 à l'aide de dispositifs d'alimentation en poudres contrôlés par mesure du poids introduit. Les conditions de température et d'extrusion sont semblables à celles de l'exemple 2 à l'entrée du compounder mais la température peut être réduite à 100°C dans la deuxième partie de la vis contenant le sel de lithium. On fait par contre défiler cette fois l'électrode positive de composition 30/1 sous la filière. La batterie ainsi obtenue a des performances semblables à celles indiquées à la Figure 2.

Cette procédure d'extrusion a été utilisée pour les mélanges copolymères plus sel, l'extrusion directe comme dans l'exemple 2 n'étant pas possible. Quand on cherche à mélanger les deux poudres, il se forme en effet des blocs collants qui bloquent l'introduction de la poudre dans la trémie d'alimentation de l'extrudeuse.

### Exemple 4

De la poudre de polyoxyde d'éthylène (MW 200.000) et de la poudre de sel de lithium TFSI sont introduites de façon séparée dans le compounder comme dans l'exemple 3. La température à l'entrée du compounder est de 200°C et de 160°C dans la deuxième partie contenant le sel de lithium. La batterie ainsi obtenue a des performances semblables à celles indiquées à la Figure 2.

## Revendications

1. Procédé d'enduction d'un électrolyte polymère solide sur l'électrode positive d'une batterie au lithium tout solide, caractérisé en ce que l'on introduit dans une extrudeuse une composition extrudable d'électrolyte, au moins partiellement amorphe, à base d'homopolymères, de copolymères ou de terpolymères avec ou sans sel de lithium, et sans plastifiants liquides, l'on extrude par voie fondue ladite composition sous forme d'un film mince d'électrolyte, d'une épaisseur uniforme entre environ 10 µm à environ 30 µm, et l'on épand directement ledit film mince, à la sortie de l'extrudeuse, sur un film d'électrode positive préparé préalablement.

2. Procédé selon la revendication 1, caractérisé en ce que l'on fait défiler le film d'électrode positive sous la filière de l'extrudeuse lors de l'épandage dudit film mince d'électrolyte.

3. Procédé selon la revendication 1, caractérisé en ce que l'on fait défiler le film d'électrode positive à une vitesse comprise entre environ 5 m/min et environ 10 m/min.

4. Procédé selon la revendication 3, caractérisé en ce que le film d'électrode positive défile à une vitesse d'environ 10 m/min.

5. Procédé selon la revendication 1, caractérisé en ce que l'on chauffe l'extrudeuse à une température comprise entre environ 50°C et environ 200°C.

6. Procédé selon la revendication 5, caractérisé en ce que la température de l'extrudeuse se situe à environ 160°C pour les mélanges polymère cristallin/sel et environ 80°C pour les mélanges polymère amorphe/sel.

7. Procédé selon la revendication 1, caractérisé en ce que l'on extrude ladite composition à travers une filière capable de produire un film dont l'épaisseur est entre environ 10 µm à environ 30 µm.

8. Procédé selon la revendication 1, caractérisé en ce que l'électrode positive a été préparée séparément, par exemple par voie solvant.

9. Procédé selon la revendication 1, caractérisé en ce que la composition extrudée comporte un copolymère d'oxyde d'éthylène et d'un oxyde d'éther cyclique, amorphe avec ou sans la présence d'un sel de lithium approprié.

10. Procédé selon la revendication 1, caractérisé en ce que la composition extrudée comporte au moins un polymère cristallin additionné d'un sel ou d'un additif solide approprié pouvant rendre le polymère partiellement amorphe.

11. Procédé selon la revendication 10, caractérisée en ce que le polymère cristallin est additionné d'un sel de lithium compatible sur le plan électrochimique et ne présentant aucun danger de manipulation.

12. Procédé selon la revendication 1, caractérisé en ce que la composition extrudée est constituée d'homopolymères ou de copolymères dérivés d'un ou plusieurs monomères comprenant au moins un hétéroatome capable de donner des liens de type donneur-récepteur avec le cation d'un sel de lithium approprié.

13. Procédé selon la revendication 12, caractérisé en ce que le sel de lithium est choisi parmi le terfluorosulfonimide de lithium (TFSI) ou le bis perhalogenoacyl ou -sulfonylimide de lithium (TFSM).

14. Procédé selon la revendication 3, caractérisé en ce que l'on fait défiler le film d'électrode positive à une vitesse légèrement supérieure à la vitesse du film sortant de l'extrudeuse afin d'obtenir, par étirement, un film mince de polymère d'épaisseur voulue sur le film d'électrode positive.

15. Procédé selon la revendication 14, caractérisé en ce que le film mince sort de l'extrudeuse à une vitesse comprise entre environ 5 m/min et environ 10 m/min.

16. Procédé selon la revendication 15, caractérisé en ce que ladite vitesse se situe à environ 10 m/min.

17. Procédé selon la revendication 15, caractérisé en ce que le film mince sort de l'extrudeuse à une vitesse légèrement inférieure à 10 m/min, tandis que le film d'électrode positive défile à une vitesse égale à au moins 10 m/min.

## Patentansprüche

1. Verfahren zum Beschichten eines festen polymeren Elektrolyten auf die positive Elektrode einer durchweg festen Lithiumbatterie, dadurch gekennzeichnet, daß in einen Extruder eine zumindest teilweise amorphe extrudierbare Elektrolytzusammensetzung auf Basis von Homopolymeren, Copolymeren oder Terpolymeren, mit oder ohne Lithiumsalz, eingebracht wird, und zwar ohne flüssige Plastifizierungsmittel, daß die genannte Zusammensetzung in Form einer dünnen Folie mit einer einheitlichen Dicke im Bereich von etwa 10 µm bis etwa 30 µm schmelzextrudiert wird, und daß die dünne Folie am Ausgang des Extruders direkt auf eine zuvor hergestellte Folie einer positiven Elektrode geschichtet wird.

2. Verfahren nach Anspruch 1, dadurch gekennzeichnet, daß man die Folie der positiven Elektrode unter dem Spritzmundstück des Extruders beim Beschichten mit der dünnen Elektrolytfolie laufen läßt.

3. Verfahren nach Anspruch 1, dadurch gekennzeichnet, daß man die Folie der positiven Elektrode mit einer Geschwindigkeit im Bereich von etwa 5 m/min bis etwa 10 m/min laufen läßt.

4. Verfahren nach Anspruch 3, dadurch gekennzeichnet, daß die Folie der positiven Elektrode mit einer Geschwindigkeit von etwa 10 m/min läuft.

5. Verfahren nach Anspruch 1, dadurch gekennzeichnet, daß der Extruder auf eine Temperatur im Bereich von etwa 50 °C bis etwa 200 °C erwärmt wird.

6. Verfahren nach Anspruch 5, dadurch gekennzeichnet, daß die Temperatur des Extruders bei Mischungen von kristallinem Polymer/Salz bei etwa 160 °C und bei Mischungen von amorphem Polymer/Salz bei etwa 80 °C liegt.

7. Verfahren nach Anspruch 1, dadurch gekennzeichnet, daß die genannte Zusammensetzung durch ein Spritzmundstück extrudiert wird, das eine Folie erzeugt, deren Dicke im Bereich von etwa 10 µm bis etwa 30 µm liegt.

8. Verfahren nach Anspruch 1, dadurch gekennzeichnet, daß die positive Elektrode gesondert hergestellt worden ist, beispielsweise unter Verwendung eines Lösungsmittels.

9. Verfahren nach Anspruch 1, dadurch gekennzeichnet, daß die extrudierte Zusammensetzung ein amorphes Copolymer aus Ethylenoxid und einem zyklischen Etheroxid, mit oder ohne Anwesenheit eines geeigneten Lithiumsalzes aufweist.

10. Verfahren nach Anspruch 1, dadurch gekennzeichnet, daß die extrudierte Zusammensetzung zumindest ein kristallines Polymer aufweist, dem ein geeignetes Salz oder ein geeignetes festes Additiv hinzugefügt ist, das das Polymer teilweise amorph macht.

11. Verfahren nach Anspruch 10, dadurch gekennzeichnet, daß dem kristallinen Polymer ein elektrochemisch kompatibles Lithiumsalz hinzugefügt ist und das keine Manipulationsgefahr beinhaltet.

12. Verfahren nach Anspruch 1, dadurch gekennzeichnet, daß die extrudierte Zusammensetzung aus Homopolymeren oder Copolymeren zusammengesetzt ist, die von einem oder mehreren Monomeren abgeleitet sind, die zumindest ein Heteroatom aufweisen, das in der Lage ist, mit dem Kation des geeigneten Lithiumsalzes Donator-Rezeptor-Bindungen einzugehen.

13. Verfahren nach Anspruch 12, dadurch gekennzeichnet, daß das Lithiumsalz ausgewählt ist aus dem Lithiumterfluorsulfonimid (TFSI) oder dem Lithium-bis-perhalogenacyl oder -sulfonylimid (TFSM).

14. Verfahren nach Anspruch 3, dadurch gekennzeichnet, daß man die Folie der positiven Elektrode mit einer Geschwindigkeit laufen läßt, die ein wenig größer als die Geschwindigkeit der den Extruder verlassenden Folie ist, um durch Ausdehnen eine dünne Polymerfolie mit der gewünschten Dicke auf der Folie der positiven Elektrode zu erzielen.

15. Verfahren nach Anspruch 14, dadurch gekennzeichnet, daß die dünne Folie den Extruder mit einer Geschwindigkeit im Bereich von etwa 5 m/min bis etwa 10 m/min verläßt.

16. Verfahren nach Anspruch 15, dadurch gekennzeichnet, daß die Geschwindigkeit etwa bei 10 m/min liegt.

17. Verfahren nach Anspruch 15, dadurch gekennzeichnet, daß die dünne Folie den Extruder mit einer Geschwindigkeit von etwas unter 10 m/min verläßt, wohingegen die Folie der positiven Elektrode mit einer Geschwindigkeit von zumindest gleich 10 m/min läuft.

## Claims

1. Process for coating a solid polymeric electrolyte onto the positive electrode of an entirely solid lithium battery, characterized in that an extrudable electrolyte composition, which is at least partially amorphous, based on homopolymers, copolymers or terpolymers with or without lithium salt and without liquid plasticizers, is introduced into an extruder, the said composition is melt-extruded in the form of a thin film of electrolyte, with a uniform thickness of between about 10 µm and about 30 µm, and the said thin film is spread directly, at the extruder outlet, onto a positive electrode film prepared beforehand.

2. Process according to Claim 1, characterized in that the positive electrode film is passed under the extruder die during spreading of the said thin film of electrolyte.

3. Process according to Claim 1, characterized in that the positive electrode film is passed through at a speed of between about 5 m/min and about 10 m/min.

4. Process according to Claim 3, characterized in that the positive electrode film passes through at a speed of about 10 m/min.

5. Process according to Claim 1, characterized in that the extruder is heated to a temperature of between about 50°C and about 200°C.

6. Process according to Claim 5, characterized in that the extruder temperature is about 160°C for crystalline polymer/salt mixtures and about 80°C for amorphous polymer/salt mixtures.

7. Process according to Claim 1, characterized in that the said composition is extruded through a die capable of producing a film which is between about 10 µm and about 30 µm in thickness.

8. Process according to Claim 1, characterized in that the positive electrode is prepared separately, for example via a solvent route.

9. Process according to Claim 1, characterized in that the extruded composition contains a copolymer of ethylene oxide and of an amorphous cyclic ether oxide in the presence or absence of a suitable lithium salt.

10. Process according to Claim 1, characterized in that the extruded composition contains at least one crystalline polymer with a suitable added salt or a suitable solid additive which can make the polymer partially amorphous.

11. Process according to Claim 10, characterized in that a lithium salt which is electrochemically compatible and which presents no handling risks is added to the crystalline polymer.

12. Process according to Claim 1, characterized in that the extruded composition consists of homopolymers or copolymers derived from one or more monomers comprising at least one hetero atom capable of giving bonds of donor-receptor type with the cation of a suitable lithium salt.

13. Process according to Claim 12, characterized in that the lithium salt is chosen from lithium terfluorosulphonimide (TFSI) or lithium bis perhaloacyl or -sulphonylimide (TFSM).

14. Process according to Claim 3, characterized in that the positive electrode film is passed through at a slightly higher speed than the speed of the film leaving the extruder so as to obtain, by drawing, a thin film of polymer of desired thickness on the positive electrode film.

15. Process according to Claim 14, characterized in that the thin film leaves the extruder at a speed of between about 5 m/min and about 10 m/min.

16. Process according to Claim 15, characterized in that the said speed is about 10 m/min.

17. Process according to Claim 15, characterized in that the thin film leaves the extruder at a speed slightly less than 10 m/min, whereas the positive electrode film passes through at a speed equal to at least 10 m/min.
